# EUROPÄISCHE PATENTSCHRIFT

(11) **EP 2 926 942 B1**
(45) Veröffentlichungstag und Bekanntmachung des Hinweises auf die Patenterteilung: **11.01.2017**
(21) Anmeldenummer: 15159239.1
(22) Anmeldetag: 16.03.2015
(51) Int. Cl.: B23Q 3/06, B23D 47/04, B23Q 7/04, B23Q 7/05

(54) **PROFILBEARBEITUNGSVORRICHTUNG UND VERFAHREN ZUM BEARBEITEN VON PROFILEN**
PROFILE MACHINING DEVICE AND METHOD FOR MACHINING PROFILES
DISPOSITIF D'USINAGE DE PROFILÉS ET PROCÉDÉ DESTINÉ À L'USINAGE DE PROFILÉS

(30) Priorität: 24.03.2014 DE 102014205405
(43) Veröffentlichungstag der Anmeldung: 07.10.2015
(73) Patentinhaber: elumatec AG, 75417 Mühlacker (DE)
(72) Erfinder: Hettler, Andreas, 75417 Mühlacker (DE); Thomas, Raimund, 75417 Mühlacker (DE)
(74) Vertreter: Patentanwälte Ruff, Wilhelm, Beier, Dauster & Partner mbB

(56) Entgegenhaltungen:
- EP-A2- 0 135 849
- DE-U1- 20 203 938
- US-A- 3 566 932
- US-A- 3 648 993

## Beschreibung

Die Erfindung betrifft eine Profilbearbeitungsvorrichtung mit einem Maschinenrahmen, wenigstens einem Werkzeug zur Profilbearbeitung, wenigstens einer Spanneinrichtung für ein zu bearbeitendes Profil und einer Vorschubeinrichtung zum Bewegen eines zu bearbeitenden Profils in einer Transportrichtung durch die Profilbearbeitungseinrichtung, wobei die Transportrichtung einer Längsrichtung des Profils entspricht und wobei die Spanneinrichtung wenigstens einen Rollenspanner zum Führen des Profils während einer Profilbearbeitung bei gleichzeitiger Bewegung des Profils mittels der Vorschubeinrichtung aufweist. Die Erfindung betrifft auch ein Verfahren zum Bearbeiten von Profilen mit einer erfindungsgemäßen Profilbearbeitungsvorrichtung.

Aus der US-Patentschrift US 3,566,932 A ist eine Vorrichtung zum Bearbeiten von gestapeltem Plattenmaterial bekannt. Die Vorrichtung weist einen Maschinenrahmen auf, auf dem der Plattenstapel aufliegt, und ein als Kreissäge ausgebildetes Werkzeug, das an einem Portal befestigt ist. Das Portal ist entlang von Führungsschienen, die zu beiden Seiten des Plattenstapels verlaufen, verschiebbar. Zusätzlich ist das Werkzeug in Querrichtung zu den Führungsschienen am Portal verschiebbar. Links und rechts des Kreissägeblatts sind an dem Werkzeugträger Rollen angeordnet, die während des Bearbeitungsvorgangs auf den Plattenstapel gedrückt werden können. Die Rollen werden zusammen mit dem Werkzeugträger und damit zusammen mit dem Kreissägeblatt bewegt. Eine Bewegung des Plattenstapels relativ zum Maschinenrahmen während einer Bearbeitung des Plattenstapels ist nicht vorgesehen.

Aus der deutschen Gebrauchsmusterschrift DE 202 03 938 U1 ist eine weitere Bearbeitungsvorrichtung für Plattenmaterial vorgesehen. Ein Werkzeug, bspw. eine Oberfräse, ist an einem Werkzeugträger befestigt, der relativ zu dem zu bearbeiteten Plattenmaterial bewegt werden kann. Der Werkzeugträger ist mit Andrückrollen versehen. Die Andrückrollen sind mit einer Vorschubeinrichtung für das Werkzeug verbunden, so dass die Einspannung mittels der Andrückrollen immer im Bereich des Werkzeugs erfolgen kann, auch wenn das Werkzeug im Verlaufe der Bearbeitung seine Position verändert.

Aus der US-Patentschrift US 3,648,993 A ist eine Vorrichtung zum Bearbeiten von gestapeltem Plattenmaterial bekannt. Speziell ist vorgesehen, einen Stapel aus Blechplatten mit einem Schneidbrenner zu bearbeiten. Der Schneidbrenner ist an einem Portal angeordnet, das in und entgegen der Längsrichtung der Blechplatten verfahren werden kann. Zusätzlich kann der Schneidbrenner quer zur Längsrichtung an dem Portal verschoben werden. Ein weiteres Portal mit mehreren Andrückrollen ist darüber hinaus vorgesehen, wobei das Portal zwei Reihen von Andrückrollen aufweist, zwischen denen eine Öffnung zum Durchführen des Schneidbrenners vorgesehen ist. Die Andrückrollen müssen dadurch im wesentlichen synchron mit dem Schneidbrenner in oder entgegen der Längsrichtung verfahren werden und können sicherstellen, dass die bearbeiteten Blechplatten in Längsrichtung gesehen vor und hinter dem Schneidbrenner niedergehalten werden.

Mit der Erfindung soll eine flexible und kostengünstige Profilbearbeitungsvorrichtung sowie ein vorteilhaftes Verfahren zum Bearbeiten von Profilen bereitgestellt werden.

Erfindungsgemäß ist hierzu eine Profilbearbeitungsvorrichtung mit den Merkmalen von Anspruch 1 bzw. ein Verfahren zum Bearbeiten von Profilen mit den Merkmalen von Anspruch 7 vorgesehen. Vorteilhafte Weiterbildungen der Erfindung sind in den Unteransprüchen angegeben.

Gemäß der Erfindung ist eine Profilbearbeitungsvorrichtung mit einem Maschinenrahmen, wenigstens einem Werkzeug zur Profilbearbeitung, wenigstens einer Spanneinrichtung für ein zu bearbeitendes Profil und einer Vorschubeinrichtung zum Bewegen eines zu bearbeitenden Profils in einer Transportrichtung, die einer Längsrichtung des Profils entspricht, durch die Profilbearbeitungsvorrichtung vorgesehen, wobei die Spanneinrichtung wenigstens einen Rollenspanner zum Führen des Profils während einer Profilbearbeitung bei gleichzeitiger Bewegung des Profils mittels der Vorschubeinrichtung aufweist, wobei die Spanneinrichtung eine Führungsschiene aufweist, die parallel zur Transportrichtung an dem Maschinenrahmen angeordnet ist und wobei der wenigstens eine Rollenspanner in und entgegen der Transportrichtung verschiebbar an der Führungsschiene angeordnet ist.

Überraschenderweise lässt sich eine erheblich flexiblere und dabei kostengünstigere Ausgestaltung einer Profilbearbeitungsvorrichtung erzielen, indem wenigstens ein Rollenspanner der Spanneinrichtung an einer Führungsschiene in und entgegen der Transportrichtung verschiebbar angeordnet ist. Bei Profilbearbeitungsvorrichtungen tritt unter anderem das Problem auf, dass zum Teil sehr lange Profilstücke bearbeitet werden, die, sei es durch falsche Lagerung oder bereits durch den Herstellungsprozess, nicht hundertprozentig geradlinig verlaufen. Da in der Regel die Profile aber an ihrer dem Werkzeug abgewandten Stirnseite mittels eines Greifers ergriffen und dann während der Profilbearbeitung durch die Profilbearbeitungsvorrichtung transportiert werden, machen solche nicht hundertprozentig geradlinigen Profile dahingehend Schwierigkeiten, dass sie mittels des Greifers nicht erfasst oder nicht in die Spannvorrichtung am Werkzeug eingeführt werden können. Abhilfe wird beim Stand der Technik dadurch geschaffen, dass zahlreiche Rollenspanner über den gesamten Eintransportbereich der Profile verteilt sind. Diese Rollenspanner werden dann in Abhängigkeit der Länge des zu bearbeitenden Profils zugestellt, so dass das Profil über seine gesamte Länge mittels der Rollenspanner geführt und vor allem in einer vorbestimmten Position angeordnet ist, so dass es von einem Greifer problemlos erfasst werden kann. Die verarbeiteten Profillängen betragen aber beispielsweise sechs Meter, so dass eine Vielzahl von Rollenspannern, beispielsweise zehn oder mehr Rollenspanner, im Eintransportbereich erforderlich sind. Indem nun wenigstens ein Rollenspanner in und entgegen der Transportrichtung an einer Führungsschiene verschiebbar ist, kann dieser verschiebbare Rollenspanner an diejenige Position gefahren werden, an der er benötigt wird, also üblicherweise an das freie Stirnende des Profils, das dann vom Greifer ergriffen werden muss und anschließend an das dem Werkzeug zugewandte Stirnende, so dass dieses dann problemlos in die Spannvorrichtung am Werkzeug eingeführt werden kann. Die überraschend einfache erfindungsgemäße Lösung ermöglicht es dadurch, mit einem oder nur wenigen verschiebbaren Rollenspannern anstelle von einer Vielzahl von fest angeordneten Rollenspannern auszukommen.

In Weiterbildung der Erfindung erstreckt sich die Führungsschiene im Wesentlichen über einen gesamten Eintransportbereich für Profile bis zum Werkzeug.

Auf diese Weise kann sichergestellt werden, dass der verschiebbare Rollenspanner unabhängig von der Länge des zu bearbeitenden Profils immer in den Bereich der Stirnseite des Profils gefahren werden kann, die von dem Greifer einer Vorschubeinrichtung erfasst werden soll.

In Weiterbildung der Erfindung sind über den gesamten Eintransportbereich Auflagerollen und/oder Führungsrollen für ein zu bearbeitendes Profil angeordnet.

Beispielsweise weist der Eintransporttisch in Längsrichtung fest angeordnete Auflagerollen und/oder Führungsrollen auf und der Rollenspanner muss dadurch lediglich eine einzige, in Richtung auf das Profil zustellbare Spannrolle aufweisen. Die Auflagerollen und/oder Führungsrollen können senkrecht zur Längsrichtung bewegbar sein, um das zu bearbeitende Profil anzuheben, beispielsweise um einen Zugriff des Greifers zu ermöglichen.

In Weiterbildung der Erfindung sind mehrere entlang der Führungsschiene verschiebbare Rollenspanner vorgesehen.

Auf diese Weise kann einer der Rollenspanner in dem Bereich der Stirnseite des zu bearbeitenden Profils verfahren werden und der oder die übrigen Rollenspanner werden so auf die Länge des Profils verteilt, dass während einer Profilbearbeitung eine Führung des Profils über seine gesamte Länge möglich ist. Gegenüber fest angeordneten Rollenspannern wird dadurch eine Bearbeitungspräzision erhöht, da die Abstände der Rollenspanner auf die gerade vorgenommene Bearbeitung und auf das zu verarbeitende Profil abgestimmt werden können.

In Weiterbildung der Erfindung ist die Führungsschiene mit einem Stator eines Linearmotors und jeder Rollenspanner mit einem Läufer des Linearmotors versehen.

Auf diese Weise können auch mehrere Rollenspanner auf einem einzigen Stator verschoben werden.

In Weiterbildung der Erfindung weist die Vorschubeinrichtung einen Greifer zum Ergreifen einer Stirnseite eines zu bearbeitenden Profils auf.

Mittels eines solchen Greifers kann ein zu bearbeitendes Profil sicher gehalten und präzise und mit hoher Haltekraft während der Profilbearbeitung in und entgegen der Transportrichtung verschoben werden.

In Weiterbildung der Erfindung ist der Greifer mit einem Läufer des Linearmotors versehen.

Auf diese Weise können sowohl die Rollenspanner als auch der Greifer der Vorschubeinrichtung auf ein und desselben Stator verschoben werden. Die Kosten für den Stator des Linearmotors fallen dadurch nur einmal an und können für die Verschiebung des Greifers als auch eines Rollenspanners oder mehrerer Rollenspanner genutzt werden.

Bei einem erfindungsgemäßen Verfahren zum Bearbeiten von Profilen mit einer erfindungsgemäßen Profilbearbeitungsvorrichtung ist das Erfassen der Position eines dem Werkzeug abgewandten Endes des Profils im Eintransportbereich, das Bewegen wenigstens eines Rollenspanners in einen Bereich des Profils, der an das dem Werkzeug abgewandte Ende angrenzt und das Zustellen einer Spannrolle des Rollenspanners in Richtung auf das Profil bis zur Anlage am Profil vorgesehen.

Auf diese Weise kann das dem Werkzeug abgewandte Ende des Profils in eine vordefinierte Lage gebracht werden, in der es dann von der Vorschubeinrichtung zuverlässig erfasst werden kann. Dadurch können auch Profile, die nicht hundertprozentig geradlinig sind, mit ihrem dem Werkzeug abgewandten Ende in eine vordefinierte Position gebracht und dadurch sicher gegriffen werden.

In Weiterbildung der Erfindung ist das Ergreifen einer Stirnseite eines zu bearbeitenden Profils mit einem Greifer nach dem Zustellen und Anlegen der Spannrolle des Rollenspanners an das Profil in dem Bereich des Profils, der an das dem Werkzeug abgewandte Ende des Profils angrenzt, vorgesehen.

Mittels eines Greifers kann das Stirnende eines Profils sicher gehalten werden und während der Profilbearbeitung kann das Profil in und entgegen der Transportrichtung relativ zum Werkzeug bewegt werden.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen Ausführungsformen können dabei in beliebiger Weise miteinander kombiniert werden, ohne den Rahmen der Erfindung zu überschreiten. In den Zeichnungen zeigen:
- Fig. 1: eine abschnittsweise schematische Darstellung einer erfindungsgemäßen Profilbearbeitungsvorrichtung,
- Fig. 2: eine abschnittsweise schematische Darstellung einer erfindungsgemäßen Profilbearbeitungsvorrichtung in einem ersten Zustand,
- Fig. 3: die Profilbearbeitungsvorrichtung der Fig. 2 in einem zweiten Zustand,
- Fig. 4: die Profilbearbeitungsvorrichtung der Fig. 2 in einem dritten Zustand,
- Fig. 5: die Profilbearbeitungsvorrichtung der Fig. 2 in einem vierten Zustand,
- Fig. 6: die Profilbearbeitungsvorrichtung der Fig. 2 in einem fünften Zustand und
- Fig. 7: eine schematische Darstellung einer Profilbearbeitungsvorrichtung. gemäß dem Stand der Technik.

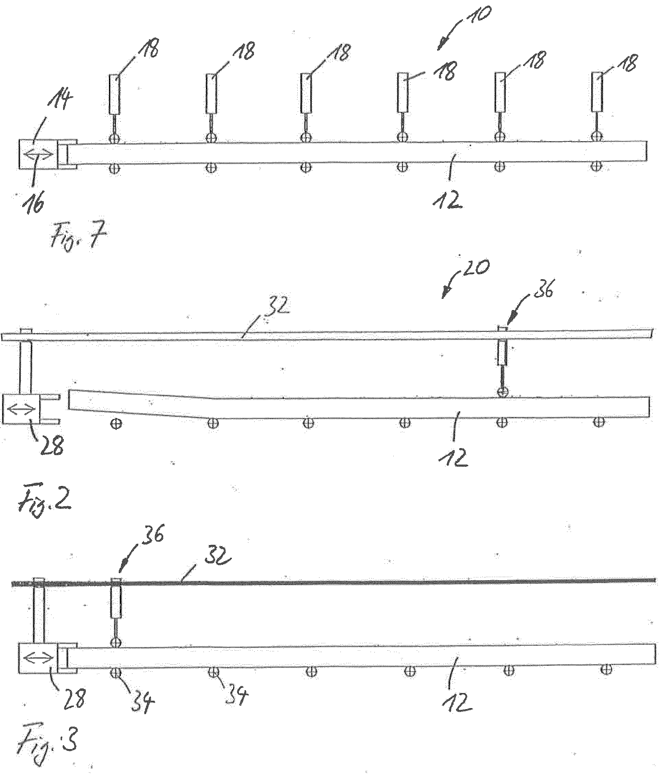

Die Darstellung der Fig. 7 zeigt abschnittsweise eine Profilbearbeitungsvorrichtung 10 gemäß dem Stand der Technik. Die Profilbearbeitungsvorrichtung 10 ist dafür vorgesehen, ein Profil 12 zu bearbeiten. Hierzu wird das Profil 12 an seiner, einem nicht dargestellten Werkzeug abgewandten Seite, mittels eines Greifers 14 einer Vorschubeinrichtung erfasst und dann in den Richtungen eines Doppelpfeils 16 bewegt. Beispielsweise wird, um einen Schlitz in das Profil 12 zu fräsen, das Profil 12 in der Darstellung der Fig. 7 nach rechts oder nach links bewegt. Nach Abschluss eines Abschnitts der Profilbearbeitung wird der Greifer 14 auch dazu genutzt, das Profil 12 weiter durch die Profilbearbeitungsvorrichtung zu transportieren.

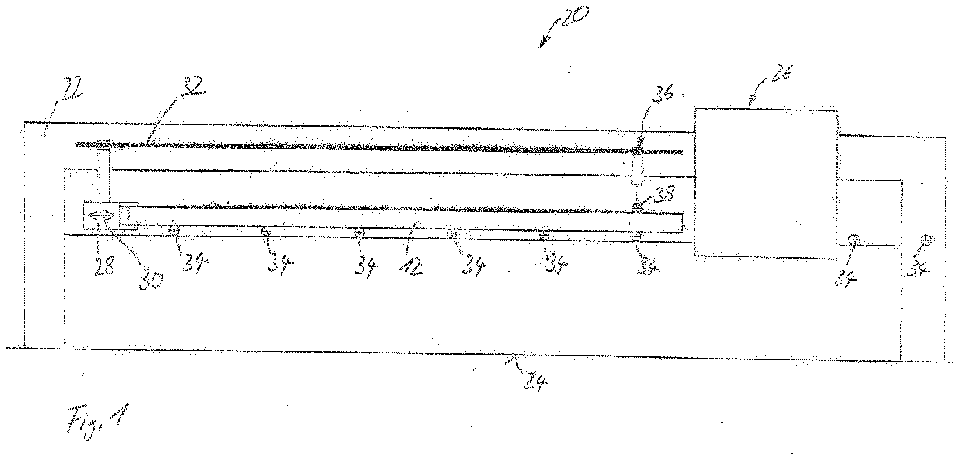

Um das Profil 12 während der Profilbearbeitung zu führen, sind insgesamt sechs Rollenspanner 18 vorgesehen. Die Rollenspanner 18 sind gleichmäßig über die Länge des Profils 12 verteilt, um das Profil 12 über seine gesamte Länge zuverlässig zu führen. Es ist ersichtlich, dass dann, wenn das Profil 12 kürzer als dargestellt ist, nur einige der Rollenspanner 18 benötigt werden. Die Rollenspanner 18 müssen auch, um eine Bewegung des Greifers 14 zu ermöglichen, senkrecht zu dem Doppelpfeil 16 aus dem Bewegungsbereich des Greifers herausgefahren werden und benötigen hierfür gegebenenfalls einen großen Verstellbereich. Die Darstellung der Fig. 1 zeigt schematisch eine erfindungsgemäße Profilbearbeitungsvorrichtung 20. Die Profilbearbeitungsvorrichtung 20 weist einen Maschinenrahmen 22 auf, der auf einer Bodenoberfläche 24 steht. An dem Maschinenrahmen 22 ist ein Werkzeug 26 angeordnet, das für die Bearbeitung eines Profils 12 vorgesehen ist und das im Wesentlichen in beliebiger Weise ausgestaltet sein kann. In der Darstellung der Fig. 1 ist das Werkzeug 26 lediglich schematisch dargestellt. Das Werkzeug 26 kann beispielsweise eine Sägeeinrichtung mit einem Kreissägeblatt, einen oder mehrere Bohr- und Frässpindeln sowie auch weitere Werkzeuge aufweisen. Das Werkzeug 26 kann beispielsweise auch einen Drehkranz aufweisen, dessen Drehachse parallel zu einer Längsrichtung des Profils 12 angeordnet ist, durch den das Profil 12 hindurchgeschoben wird und an dem mehrere Werkzeuge angeordnet sind. Eine Relativbewegung zwischen Werkzeug 26 und Profil 12 wird bei der Profilbearbeitungsvorrichtung 20 der Fig. 1 zum einen dadurch erreicht, dass während eines Angriffs des Werkzeugs 26 an dem Profil 12 dieses mittels eines Greifers 28 einer Vorschubeinrichtung in den Richtungen eines Doppelpfeils 30 bewegt wird. Zum anderen kann das Werkzeug 26 in zu dem Doppelpfeil 30 senkrechten Richtungen bewegt werden, in der Darstellung der Fig. 1 also nach oben und unten und in die Zeichenebene der Fig. 1 hinein und aus dieser heraus.

Der Greifer 28 ist an einer Führungsschiene 32 verschiebbar angeordnet, die an dem Maschinenrahmen 22 befestigt ist. Die Führungsschiene 32 erstreckt sich bis kurz vor das Werkzeug 26, so dass der Greifer 30 das Profil 12 während einer Profilbearbeitung und während eines Transports am Werkzeug vorbeibewegen kann. Das Profil 12 liegt auf mehreren Auflagerollen 34 auf, die gleichmäßig voneinander beabstandet an dem Maschinenrahmen angeordnet sind und, in der Darstellung der Fig. 1, sowohl links als auch rechts des Werkzeugs 26 angeordnet sind. Auf den Auflagerollen 34 kann das Profil 12 somit während und nach einer Profilbearbeitung mittels des Werkzeugs 12 transportiert werden. Die Auflagerollen 34 sind in Längsrichtung fest angeordnet, können aber zumindest teilweise senkrecht zur Längsrichtung, in Fig. 1 also nach oben, angehoben beziehungsweise, abgesenkt werden, beispielsweise um das Profil 12 zeitweise anzuheben, um einen Zugriff des Greifers 30 zu erleichtern. Die Auflagerollen 34 können auch als Führungsrollen bezeichnet werden.

Die Führungsschiene 32 und der Greifer 30 bilden eine Vorschubeinrichtung für das Profil 12.

An der Führungsschiene 32 ist in den Richtungen des Doppelpfeils 30 verschiebbar weiter ein Rollenspanner 36 angeordnet. Der Rollenspanner 36 weist eine Spannrolle 38 auf, die auf das Profil 12 zugestellt und wieder von dem Profil 12 zurückgezogen werden kann. Der Rollenspanner 36 ist entlang der gesamten Führungsschiene 32 verschiebbar und kann somit in den Bereich des Endes des Profils 12, das vom Greifer 30 ergriffen ist, gefahren werden und auch, wie in Fig. 1 dargestellt ist, bis unmittelbar vor das Werkzeug 26 gefahren werden. In der schematischen Darstellung der Fig. 1 ist lediglich ein Rollenspanner 36 dargestellt. Es können aber mehrere Rollenspanner 36 vorgesehen sein, die dann alle auf der Führungsschiene 32 verschiebbar angeordnet sind.

Die Führungsschiene 32 ist in nicht dargestellter Weise mit einem Stator eines Linearmotors versehen. Der Rollenspanner 36 ist mit einem Läufer des Linearmotors versehen und kann dadurch automatisch entlang der Führungsschiene 32 verschoben werden.

Der Greifer 28 ist ebenfalls mit einem Läufer des Linearmotors versehen, so dass für eine Bewegung sowohl des Greifers 28 als auch des Rollenspanners 36 entlang der Führungsschiene 32 lediglich ein Linearmotor benötigt wird.

Die Darstellung der Fig. 2 zeigt die Profilbearbeitungsvorrichtung 20 der Fig. 1 in einem ersten Zustand, in dem eine dem Werkzeug 26 abgewandte Stirnseite des Profils 12 ergriffen werden soll. Wie Fig. 2 zu entnehmen ist, ist das Profil 12 nicht über seine gesamte Länge geradlinig, sondern ist im Bereich des dem Greifer 28 zugewandten Endes nach oben gebogen. In dem Zustand der Fig. 2 könnte das vor dem Greifer 28 liegende Ende des Profils 12 daher nicht oder nicht korrekt ergriffen werden. Um solche gebogenen Profile zuverlässig ergreifen zu können, ist, wie bereits erörtert wurde, beim Stand der Technik, siehe Fig. 7, eine große, gleichmäßig über die gesamte Länge des Eintransportbereichs verteilte Anzahl an Rollenspannern vorgesehen.

Bei der erfindungsgemäßen Profilbearbeitungsvorrichtung 20 genügt hingegen ein einziger Rollenspanner 36, um das Profil 12 an seinem dem Werkzeug abgewandten Ende sicher zu ergreifen.

Wie in Fig. 3 dargestellt ist, wird hierzu der Rollenspanner 36 in den Bereich des Endes des Profils 12 verfahren, das dem Werkzeug abgewandt ist und das vor dem Greifer 28 liegt. Dieses Ende des Profils 12 wird dadurch gegen die dem Rollenspanner 36 gegenüberliegende Auflagerolle 34 gedrückt und dadurch in einer vordefinierten Position, nämlich auf der Auflagerolle 34 aufliegend, angeordnet. In dieser Position ist, wie in Fig. 3 dargestellt ist, der Greifer 28 korrekt zu dem Ende des Profils 12 positioniert und kann dieses zuverlässig ergreifen.

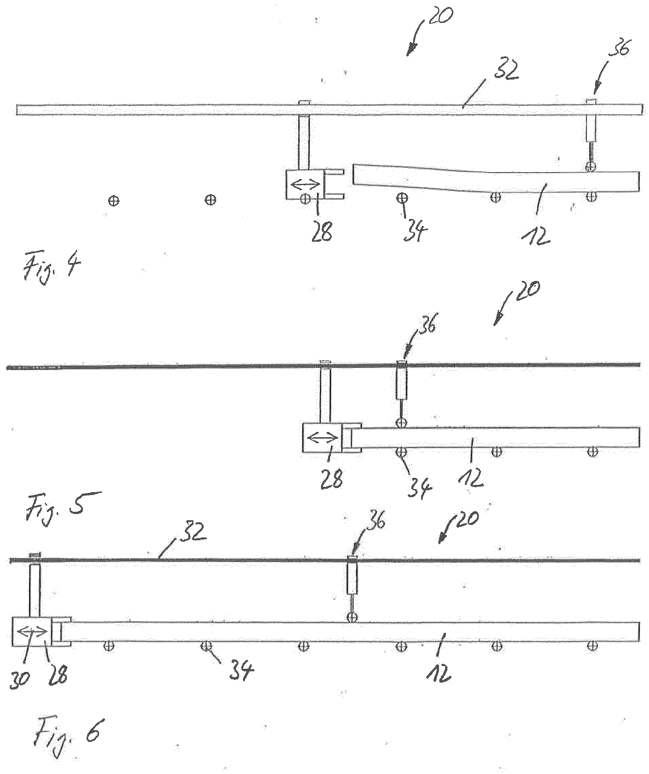

Die Darstellung der Fig. 4 zeigt die erfindungsgemäße Profilbearbeitungsvorrichtung 20 in einem weiteren Zustand. Verarbeitet werden soll nun ein kürzeres Profil 12, dessen, dem Werkzeug ab- und dem Greifer 28 zugewandtes Ende aber ebenfalls von den Auflagerollen 34 abgehoben ist, da das Profil 12 nicht über seine gesamte Länge geradlinig verläuft. Um dieses Profil 12 zu greifen, wird nun wieder der Rollenspanner 36 entlang der Führungsschiene 32 in den Bereich des vor dem Greifer 28 liegenden Endes des Profils 12 verfahren, wie in Fig. 5 dargestellt ist. Dadurch wird das Profil 12 im Bereich eines vor dem Greifer 28 liegenden Endes gegen die Auflagerolle 34 gedrückt und der Greifer 28 kann das Profil 12 zuverlässig ergreifen.

Mit der erfindungsgemäßen Profilbearbeitungsvorrichtung 20 können somit Profile 12 beliebiger Länge verarbeitet werden und auch bei einer Abweichung von der Geradlinigkeit können diese Profile 12 zuverlässig mittels des Greifers 28 gegriffen werden, ohne dass, wie bei Profilbearbeitungsvorrichtungen gemäß dem Stand der Technik, eine große Anzahl an Rollenspannern 18 gleichmäßig über den gesamten Eintransportbereich der Profilbearbeitungsvorrichtung verteilt sein müssen.

Die Darstellung der Fig. 6 zeigt die erfindungsgemäße Profilbearbeitungsvorrichtung 20 in einem weiteren Zustand. Das dem Werkzeug abgewandte Ende des Profils 12 ist vom Greifer 28 ergriffen worden und der Greifer 28 schiebt oder zieht nun das Profil 12 in den Richtungen des Doppelpfeils 30 während einer Profilbearbeitung relativ zum Werkzeug 26, siehe Fig. 1. Der Rollenspanner 36 ist während der Profilbearbeitung nun so angeordnet, dass das Profil 12 möglichst gleichmäßig geführt ist. Der Rollenspanner 36 ist im Zustand der Fig. 6 hierzu etwa auf die Mitte des Abstands zwischen dem Werkzeug und dem Greifer 28 verfahren worden. Wie bereits ausgeführt wurde, können mehrere verschiebbare Rollenspanner 36 vorgesehen sein, um das Profil 12 sicher zu führen.

Bei der erfindungsgemäßen Profilbearbeitungsvorrichtung 20 kann somit sichergestellt werden, dass auch ein nicht hundertprozentig geradliniges Profil von dem Greifer 28 bzw. einer Vorschubeinrichtung sicher gegriffen werden kann und darüber hinaus kann eine über die Länge des Profils gleichmäßig verteilte Führung während einer Profilbearbeitung sichergestellt werden. Die erfindungsgemäße Profilbearbeitungsvorrichtung 20 kommt dennoch mit nur einem oder wenigen Rollenspannern 36 aus.

## Patentansprüche

1. Profilbearbeitungsvorrichtung mit einem Maschinenrahmen (22), wenigstens einem Werkzeug (26) zur Profilbearbeitung, wenigstens einer Spanneinrichtung für ein zu bearbeitendes Profil (12) und einer Vorschubeinrichtung zum Bewegen eines zu bearbeitenden Profils (12) in einer Transportrichtung, die einer Längsrichtung des Profils (12) entspricht, durch die Profilbearbeitungseinrichtung (20), wobei die Spanneinrichtung wenigstens einen Rollenspanner (36) zum Führen des Profils (12) während einer Profilbearbeitung bei gleichzeitiger Bewegung des Profils mittels der Vorschubeinrichtung aufweist, **dadurch gekennzeichnet, dass** die Spanneinrichtung eine Führungsschiene (32) aufweist, die parallel zur Transportrichtung an dem Maschinenrahmen (22) angeordnet ist, wobei der wenigstens eine Rollenspanner (36) in und entgegen der Transportrichtung verschiebbar an der Führungsschiene (32) angeordnet ist, dass sich die Führungsschiene (32) im Wesentlichen über einen gesamten Eintransportbereich für Profile (12) bis zum Werkzeug (26) erstreckt, und dass die Vorschubeinrichtung einen Greifer (28) zum Ergreifen einer Stirnseite eines zu bearbeitenden Profils (12) aufweist, wobei Mittel zum Erfassen einer Position der dem Werkzeug (26) abgewandten Stirnseite des Profils (12) in Eintransportbereich und Mittel zum Bewegen des wenigstens einen Rollenspanners (36) in einen Bereich des Profils (12), der an die dem Werkzeug abgewandte Stirnseite angrenzt, vorgesehen sind.

2. Profilbearbeitungsvorrichtung nach Anspruch 1, **dadurch gekennzeichnet, dass** über den gesamten Eintransportbereich Auflagerollen und/oder Führungsrollen (34) für ein zu bearbeitendes Profil (12) angeordnet sind.

3. Profilbearbeitungsvorrichtung nach einem der vorstehenden Ansprüche, **dadurch gekennzeichnet, dass** mehrere entlang der Führungsschiene (32) verschiebbare Rollenspanner (36) vorgesehen sind.

4. Profilbearbeitungsvorrichtung nach Anspruch 3, **dadurch gekennzeichnet, dass** die Führungsschiene (32) mit einem Stator eines Linearmotors und jeder Rollenspanner (36) mit einem Läufer des Linearmotors versehen ist.

5. Profilbearbeitungseinrichtung nach einem der vorstehenden Ansprüche, **dadurch gekennzeichnet, dass** der Greifer (28) auf der Führungsschiene verschiebbar angeordnet ist.

6. Profilbearbeitungsvorrichtung nach einem der vorstehenden Ansprüche, **dadurch gekennzeichnet, dass** der Greifer (28) mit einem Läufer des Linearmotors versehen ist.

7. Verfahren zum Bearbeiten von Profilen mit einer Profilbearbeitungsvorrichtung nach einem der vorstehenden Ansprüche, **gekennzeichnet durch** Erfassen der Position einer dem Werkzeug (26) abgewandten Stirnseite des Profils (12) im Eintransportbereich, Bewegen wenigstens eines Rollenspanners (36) in einen Bereich des Profils (12), der an die dem Werkzeug (26) abgewandte Stirnseite angrenzt, Zustellen einer Spannrolle (38) des Rollenspanners (36) in Richtung auf das Profil (12) und Ergreifen der Stirnseite des zu bearbeitenden Profils (12) mit einem Greifer (28) der Vorschubeinrichtung nach dem Zustellen der Spannrolle (38) des Rollenspanners (36) an das Profil (12) in dem Bereich des Profils (12), der an die dem Werkzeug (26) abgewandte Stirnseite des Profils (12) angrenzt.

## Claims

1. Profile machining device, comprising a machine frame (22), at least one tool (26) for profile machining, at least one clamping device for a profile (12) to be machined, and an advancing device for moving a profile (12) to be machined through the profile machining device (20) along a transport direction corresponding to a longitudinal direction of the profile (12), wherein the clamping device includes at least one roller clamp (36) for guiding the profile (12) during a profile machining procedure with simultaneous moving of the profile using the advancing device, **characterized in that** the clamping device includes a guide rail (32) disposed on the machine frame (22) in parallel to the transport direction, wherein the at least one roller clamp (36) is arranged on the guide rail (32) to be displaceable in and counter the transport direction, **in that** the guide rail (32) extends essentially over an entire infeed zone for profiles (12) up to the tool (26), and **in that** the advancing device includes a gripper (28) for gripping a front end of a profile (12) to be machined, wherein means for detecting a position of the front end of the profile (12) facing away from the tool (26) in the infeed zone and means for moving the at least one roller clamp (36) to a portion of the profile (12) adjoining the front end facing away from the tool, are provided.

2. Profile machining device according to claim 1, **characterized in that** supporting rollers and/or guiding rollers (34) for a profile (12) to be machined are disposed over the entire infeed zone.

3. Profile machining device according to any of the preceding claims, **characterized in that** a plurality of roller clamps (36) displaceable along the guide rail (32) are provided.

4. Profile machining device according to claim 3, **characterized in that** the guide rail (32) is provided with a stator of a linear motor and each roller clamp (36) is provided with a rotor of the linear motor.

5. Profile machining device according to any of the preceding claims, **characterized in that** the gripper (28) is displaceably disposed on the guide rail.

6. Profile machining device according to any of the preceding claims, **characterized in that** the gripper (28) is provided with a rotor of the linear motor.

7. Method for machining profiles using a profile machining device according to any of the preceding claims, **characterized by** detecting the position of a front end of the profile (12) facing away from the tool (26) in the infeed zone, moving at least one roller clamp (36) to a portion of the profile (12) adjoining the front end facing away from the tool (12), approaching a clamping roller (38) of the roller clamp (36) in a direction towards the profile (12), and gripping the front end of the profile (12) to be machined using a gripper (28) of the advancing device after approaching the clamping roller (38) of the roller clamp (36) to the profile (12) in the portion of the profile (12) adjoining the front end of the profile (12) facing away from the tool (26).

## Revendications

1. Dispositif d'usinage de profilés comprenant un châssis de machine (22), au moins un outil (26) pour l'usinage de profilés, au moins un dispositif de serrage pour un profilé à usiner (12) et un dispositif d'avance pour déplacer un profilé à usiner (12) dans une direction de transport qui correspond à une direction longitudinale du profilé (12) à travers le dispositif d'usinage de profilés (20), le dispositif de serrage présentant au moins un dispositif de serrage à rouleaux (36) pour le guidage du profilé (12) pendant un usinage du profilé avec un déplacement simultané du profilé au moyen du dispositif d'avance, **caractérisé en ce que** le dispositif de serrage présente un rail de guidage (32) qui est disposé parallèlement à la direction de transport sur le châssis de machine (22), l'au moins un dispositif de serrage à rouleaux (36) étant disposé sur le rail de guidage (32) de manière déplaçable dans la direction de transport et dans la direction opposée, **en ce que** le rail de guidage (32) s'étend essentiellement sur toute une région d'amenée de profilés (12) jusqu'à l'outil (26), et **en ce que** le dispositif d'avance présente un dispositif de préhension (28) pour saisir un côté frontal d'un profilé à usiner (12), des moyens étant prévus pour détecter une position du côté frontal du profilé (12) opposé à l'outil (26) dans la région d'amenée et des moyens étant prévus pour déplacer l'au moins un dispositif de serrage à rouleaux (36) dans une région du profilé (12) qui est adjacente au côté frontal opposé à l'outil.

2. Dispositif d'usinage de profilés selon la revendication 1, **caractérisé en ce que** sur toute la région d'amenée sont disposés des rouleaux d'appui et/ou des rouleaux de guidage (34) pour un profilé à usiner (12).

3. Dispositif d'usinage de profilés selon l'une quelconque des revendications précédentes, **caractérisé en ce que** plusieurs dispositifs de serrage à rouleaux (36) déplaçables le long du rail de guidage (32) sont prévus.

4. Dispositif d'usinage de profilés selon la revendication 3, **caractérisé en ce que** le rail de guidage (32) est pourvu d'un stator d'un moteur linéaire et chaque dispositif de serrage à rouleaux (36) est pourvu d'un rotor du moteur linéaire.

5. Dispositif d'usinage de profilés selon l'une quelconque des revendications précédentes, **caractérisé en ce que** le dispositif de préhension (28) est disposé de manière déplaçable sur le rail de guidage.

6. Dispositif d'usinage de profilés selon l'une quelconque des revendications précédentes, **caractérisé en ce que** le dispositif de préhension (28) est pourvu d'un rotor du moteur linéaire.

7. Procédé pour usiner des profilés utilisant un dispositif d'usinage de profilés selon l'une quelconque des revendications précédentes, **caractérisé par** la détection de la position d'un côté frontal du profilé (12) opposé à l'outil (26) dans la région d'amenée, le déplacement d'au moins un dispositif de serrage à rouleaux (36) dans une région du profilé (12) qui est adjacente au côté frontal opposé à l'outil (26), l'approche d'un rouleau de serrage (38) du dispositif de serrage à rouleaux (36) dans la direction du profilé (12) et la saisie du côté frontal du profilé à usiner (12) avec un dispositif de préhension (28) du dispositif d'avance après l'approche du rouleau de serrage (38) du dispositif de serrage à rouleaux (36) jusqu'au profilé (12) dans la région du profilé (12) qui est adjacente au côté frontal du profilé (12) opposé à l'outil (26).
